# EUROPÄISCHE PATENTSCHRIFT

(11) **EP 2 127 722 B1**
(45) Veröffentlichungstag und Bekanntmachung des Hinweises auf die Patenterteilung: **26.10.2011**
(21) Anmeldenummer: 09159423.4
(22) Anmeldetag: 05.05.2009
(51) Int. Cl.: B01D 46/10, B01D 46/00, F24F 13/28

(54) **Vorrichtung zur Filtration eines mit Aerosolen beladenen Gasvolumenstroms**
Device for filtering a gas volume flow loaded with aerosols
Dispositif de filtration d'un flux de volume de gaz chargé d'aérosol

(30) Priorität: 30.05.2008 DE 102008026068
(43) Veröffentlichungstag der Anmeldung: 02.12.2009
(73) Patentinhaber: YIT Germany GmbH, 80992 München (DE)
(72) Erfinder: Felser, Hans, 52080, Aachen (DE); Martinsteg, Hans, 52159, Roetgen (DE); Schweinheim, Claus, 50996, Köln (DE)
(74) Vertreter: Bauer, Dirk

(56) Entgegenhaltungen:
- EP-A2- 0 815 919
- FR-A1- 2 261 484
- GB-A- 1 490 019
- US-A- 3 880 625
- US-A- 4 175 936
- US-A- 5 733 348
- US-A- 5 837 040

## Beschreibung

### Einleitung

Die Erfindung betrifft eine Vorrichtung zur Filtration eines mit Aerosolen beladenen Gasvolumenstroms, mit einem Filtergehäuse, das einen Rohgaseinlass und einen Reingasauslass aufweist und mit mindestens einem Filterelement versehen ist, das einen Innenraum des Filtergehäuses in einen den Rohgaseinlass aufweisenden Rohgasraum und einen den Reingasauslass aufweisenden Reingasraum unterteilt, wobei ein Überströmen des Gasvolumenstroms von dem Rohgasraum in den Reingasraum lediglich durch ein in dem Filterelement befindliches Filtermedium hindurch möglich ist und das Filtergehäuse eine Wechselöffnung aufweist, durch die das Filterelement quer zu einer Durchströmungsrichtung mittels einer Wechselsackmethode entnehmbar oder einführbar ist, wobei das Filterelement einen einen Durchströmungsquerschnitt umlaufend umgebenden Elementrahmen besitzt, mit dessen erster Stirnfläche sich das Filterelement unter Zwischenschaltung einer ersten umlaufenden Dichtung an einer ersten senkrecht zu der Durchströmungsrichtung ausgerichteten ersten Stützfläche des Filtergehäuses abstützt und an dessen gegenüber liegender zweiter Stirnfläche das Filterelement mittels eines Spannrahmens einer Spanneinrichtung gegen die erste Stützfläche des Filtergehäuses pressbar ist, wobei zwischen einer ersten umlaufenden Dichtfläche des Spannrahmens und der zweiten Stirnfläche des Elementrahmens eine zweite umlaufende Dichtung angeordnet ist, wobei der Spannrahmen mit einer dritten, um den Durchströmungsquerschnitt umlaufenden Dichtung an das Filtergehäuse dichtend angeschlossen ist, und wobei ferner die Spanneinrichtung mindestens ein Spannorgan zur Erzeugung einer Spannkraft aufweist.

Filtereinrichtungen der vorgenannten Art sind zum Beispiel aus der internationalen Patentanmeldung WO 2007/106001 A1 bekannt. Das dort beschriebene Filterelement wird mittels einer Spannvorrichtung auf der Gaseinlassseite der Filtereinrichtung gasdicht gegen das Filtergehäuse gepresst, während auf der Gasauslassseite die Abdichtung an einem beweglichen Halterahmen erfolgt, der über die Spanneinrichtung gegen das Filterelement gepresst wird. Die Spannorgane der Spannvorrichtung bestehen aus einer in einem Zylinder sitzenden Druckfeder, die für den notwendigen Anpressdruck sorgt und die über einen per Druckluft im Zylinder bewegbaren Kolben zurückgedrückt werden kann, wodurch das Filterelement freigegeben wird und ausgetauscht werden kann. Konstruktionsbedingt liegen die Spannorgane dabei im Bereich des Rohgasraumes. Dies hat den Nachteil, dass dadurch zum einen das Filtergehäuse in die Länge gezogen wird und somit einen zusätzlichen Platzbedarf hat, zum anderen lagern sich an den Spannorganen die im Rohgasstrom befindlichen Aerosole ab.

Auch gemäß den Dokumenten DE 38 31 891 C1 und DE 75 00 977 U1 werden die Filterelemente mittels einer Spannvorrichtung gasdicht gegen das Filtergehäuse gepresst, wobei die Spannorgane im Bereich des Rohgasraumes liegen. Aus der DE 38 31 891 C1 ist ein Staubfilter mit Filterelemente in Kassettenbauart bekannt, bei dem die Fliterkassetten an Halteschienen befestigt sind, die im Filtergehäuse senkrecht verschiebbar geführt sind. Dabei ist in den Halteschienen mindestens eine Stabfeder drehbar gelagert mittels der ein Nachlassen der Elastizität von die Filterelemente umgebenden Dichtelementen ausgeglichen werden kann. Gemäß der DE 75 00 977 U 1 werden für das Anpressen des Andruckrahmens an rahmenförmige Anlageflächen Druckfedern herangezogen.

Im weiteren Umfeld ist aus der US 3,880,625 eine Vorrichtung bekannt, die zur Filtration von Frischluft zum Zweck der Erzeugung von Reinraumbedingungen eingesetzt wird. Auch hier werden um das Filterelement herum angeordnete Dichtungen mit Hilfe von Spannvorrichtungen gegen ein Filtergehäuse verspannt. Das Dokument trägt im Besonderen dem Problem Rechnung, dass Dichtungen nicht uneingeschränkt zuverlässig sind und jederzeit teilweise oder vollständig ausfallen können. Um dem zu begegnen, wird an potentiell undichten Stellen zwischen der Frischluft- und der Reinluftseite des Filterelements ein Unterdrucksystem vorgesehen, welches fälschlicherweise am Filterelement vorbeiströmende ungefilterte Frischluft absaugt. Die zur Anpressung der Dichtungen gegen das Filterelement verwendeten Spannvorrichtungen liegen dabei innerhalb des mit Unterdruck beaufschlagten Raumes und werden somit ebenfalls nachteilhafterweise mit dem ungefiltertern Gas beaufschlagt. Wenngleich im Bereich der Frischluftfiltration unerheblich, ist dieser Umstand auf dem Gebiet der Rohgasreinigung von Nachteil.

Ebenfalls auf dem Gebiet der Reinraumtechnik offenbart die US-Patentschrift US 4,175,936 einen Lufteinlass, der mit einem Filterelement ausgestattet ist. Um einen Kurzschluss zwischen der Frischluft- und der Reinluftseite des Filters zu vermeiden, sind auch bei dieser Vorrichtung um die Kanten des Filterelements umlaufende Dichtungen vorgesehen. Als nachteilig ist dabei zu bewerten, dass für ein Verspannen des Dichtungen gegen das Filtergehäuse zwei unabhängige Spannsysteme notwendig sind. Dies erhöht den Aufwand sowohl bei d einer Erstmontage des Filterelements, als auch bei dessen Wechsel. Darüber hinaus bringt die Anordnung zweier Spannsysteme der gezeigten Art eine erhebliche Komplexität mit sich, die gegebenenfalls notwendige Reparaturen und sonstige Wartungsvorgänge erschwert.

### Aufgabe

Aufgabe der vorliegenden Erfindung ist es daher, ausgehend von diesem aus dem Stand der Technik her bekannten Aufbau einer Filtervorrichtung, die Spannorgane der Spanneinrichtung so anzuordnen, dass sowohl für das Filtergehäuse ein kompakter und einfacher Aufbau erreicht werden kann, als auch die Spannorgane nicht mehr mit dem Gasstrom in Kontakt kommen können.

### Lösung

Diese Aufgabe wird erfindungsgemäß dadurch gelöst, dass das Spannorgan zwischen dem Spannrahmen und der ersten Stützfläche des Filtergehäuses angeordnet ist. Damit befindet sich das Spannorgan nicht mehr in Strömungsrichtung gesehen vor dem Filterelement sondern seitlich daneben, was eine erheblich kompaktere und gleichzeitig einfachere Bauweise der gesamten Filtervorrichtung zur Folge hat.

Vorteilhafterweise befindet sich das Spannorgan - bei Betrachtung in Strömungsrichtung - zwischen der ersten Dichtung und der dritten Dichtung, vorzugsweise zwischen der ersten und der zweiten Dichtung und befindet sich somit zwischen dem Elementrahmen und dem Filtergehäuse. In diesem von der ersten, der zweiten und der dritten Dichtung dicht abgeschlossenen Zwischenraum, der von dem Elementrahmen, dem Spannrahmen und dem Filtergehäuse begrenzt wird, kann eine Kontamination des Spannorgans durch Restaerosole verhindert werden, was aufwändige Reinigungsarbeiten nach einem Wechsel des Filtermediums unnötig macht.

Neben der eingangs beschriebenen ersten Dichtfläche ist vorgesehen, dass der Spannrahmen eine zweite umlaufende Dichtfläche aufweist, mit der die dritte umlaufende Dichtung gegen eine zweite Stützfläche des Filtergehäuses pressbar ist. Alternativ kann die dritte Dichtung auch ein Faltenbalg sein, der in Durchströmungsrichtung in seiner Länge veränderbar ist.

Das Spannorgan, das den Spannrahmen gegen das Filterelement und diese wiederum gegen die erste Stützfläche des Filtergehäuses presst, soll vorzugsweise eine Druckfeder aufweisen, die eine Zugkraft auf ein mit dem Spannrahmen gekoppeltes, bolzenförmiges Übertragungselement ausübt.

Zudem soll das Spannorgan mittels einer die Spannkraft der Spanneinrichtung übersteigenden Entlastungseinrichtung ausgestattet sein, die so bewegbar ist, dass die Dichtungen entlastet werden und das Filterelement im Wesentlichen kraftfrei in eine Richtung senkrecht zu der Durchströmungsrichtung durch eine öffenbare und dicht verschließbare Wechselöffnung in dem Filtergehäuse aus seiner Betriebsposition entnehmbar ist. Die Entlastungseinrichtung soll dabei ein Pneumatikzylinder sein, der zwischen der Druckfeder des Spannorgans und dem Spannrahmen angeordnet ist, wobei ein Kolben der Entlastungseinrichtung mit dem Übertragungselement gekoppelt ist. Für einen festen Sitz des Filterelements im Filtergehäuse soll das Spannorgan beziehungsweise die Entlastungseinrichtung des Spannorgans am Filtergehäuse befestigt sein.

Eine Ausführungsform sieht vor, dass der Spannrahmen im Querschnitt eine Z-Form oder eine Doppel-L-Form besitzt. Um durch das Spannprinzip bedingte, mögliche Toleranzen ausgleichen zu können, soll vorzugsweise die dritte Dichtung einen größeren möglichen Verformungsweg- in Durchströmungsrichtung betrachtet - aufweisen als die erste Dichtung und/oder die zweite Dichtung. Außerdem bedingt diese Ausführungsform des Spannrahmens, dass ein von der ersten Stützfläche begrenzter erster freier Querschnitt kleiner ist als ein von der zweiten Stützflache begrenzter zweiter freier Querschnitt.

Damit sich überprüfen lässt, ob die Dichtwirkung der Dichtungen weiterhin ausreichend hoch ist, ist speziell vorgesehen, dass sich zwischen der ersten Dichtung und der ersten Stützfläche oder zwischen der zweiten Dichtung und der ersten Dichtfläche des Spannrahmens oder zwischen der dritten Dichtung und der zweiten Stützfläche des Filtergehäuses eine Prüfrille befindet.

### Ausführungsbeispiele

Im folgenden soll die Erfindung anhand von in den Figuren dargestellten Ausführungsbeispielen für eine Filtervorrichtung mit einer Drei-Dichtungs-Anordnung mit ziehender Druckfeder seitlich neben der Filterzelle näher erläutert werden.

Es zeigen:
- Figur 1:: einen Vertikalschnitt durch eine Filtervorrichtung mit seitlich neben der Filterzelle angeordneten Spannorganen;
- Figur 2:: einen Horizontalschnitt durch eine Filtervorrichtung gemäß Figur 1;
- Figur 3:: eine Detailansicht der Anordnung der Dichtungen und der Spanneinrichtung ge- mäß Figur 1;
- Figur 4:: eine alternative Ausführungsform des Aufbaus der Dichtungen gemäß Figur 1.

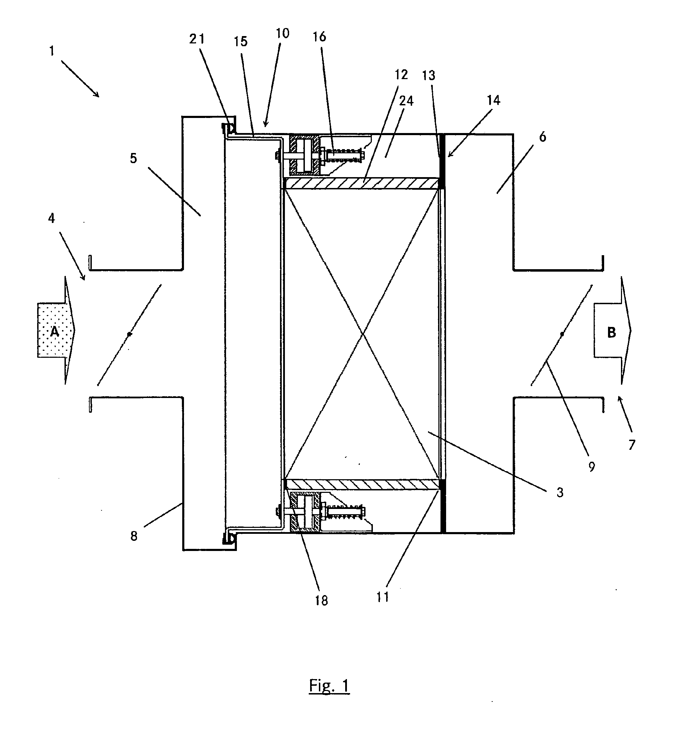

In Figur 1 ist der Aufbau einer erfindungsgemäßen Filtervorrichtung 1 als Vertikalschnitt dargestellt, wobei die nicht zu sehende Frontseite der Filtervorrichtung 1 ist mit einer Wechselöffnung 2 zum Wechseln eines Filterelementes 3 versehen. Ein Gasvolumenstrom A (Rohgasstrom), der zum Beispiel zumindest teilweise toxische oder gesundheitlich bedenkliche Partikel enthalten oder mit sonstigen Aerosolen beladen sein kann, tritt von links durch einen Rohgaseinlass 4 in einen Rohgasraum 5 der Filtervorrichtung 1 ein, strömt von dort weiter durch das Filterelement 3, um dann in einen Reingasraum 6 zu gelangen, aus dem der in dem Filterelement 3 gereinigte Gasvolumenstrom B (Reingasstrom) die Filtervorrichtung 1 über einen Reingasauslass 7 wieder verlässt. Der Innenraum eines die Filtervorrichtung 1 begrenzenden Filtergehäuses 8 ist dabei derart ausgestaltet, dass der Gasvolumenstrom A vom Rohgasraum 5 ausschließlich durch ein im Filterelement 3 befindliches Filtermedium in den Reingasraum 6 gelangen kann. Je nach gefordertem Reinheitsgrad des austretenden Gasvolumenstroms B können mehrere der Filterelemente 3 in einer Filtervorrichtung 1 oder aber auch mehrere Filtervorrichtungen 1 in Reihe hintereinander geschaltet werden. Um die Durchströmung bei Wartungsarbeiten abschalten zu können, befindet sich sowohl im Rohgaseinlass 4 als auch im Reingasauslass 7 je eine Absperrklappe 9.

Die Halterung des Filterelements 3 im Innenraum der Filtervorrichtung 1 erfolgt über eine Spanneinrichtung 10, die eine erste Stirnfläche 11 eines Elementrahmens 12 des Filterelements 3 gegen eine erste Stützfläche 13 des Filtergehäuses 8 presst. Diese erste Stützfläche 13 ist senkrecht zur Durchströmungsrichtung der Filtervorrichtung 1 angeordnet und bildet teilweise eine Wandung 14 des Reingasraums 6 an der Seite, aus der der Gasvolumenstrom B aus dem Filterelement 3 austritt. Die Spanneinrichtung 10 besteht aus einem im Schnitt Z- oder Doppel-L-förmig ausgeformten Spannrahmen 15, der von vier Spannorganen 16 an einer den Spannrahmen 15 umlaufenden ersten Dichtfläche 17 gegen eine zweite Stirnfläche 18 des Elementrahmens 12 drückt.

Zwischen der ersten Stirnfläche 11 des Elementrahmens 12 des Filterelements 3 und der ersten Stützfläche 13 des Filtergehäuses 8 befindet sich eine die Auslassöffnung des Filterelements 3 umlaufende erste Dichtung 19. Desgleichen befindet sich auch zwischen der zweiten Stirnfläche 18 des Elementrahmens 12 des Filterelements 3 und der ersten Dichtfläche 17 des Spannrahmens 15 eine die Einlassöffnung des Filterelements 3 umlaufende zweite Dichtung 20. Eine dritte Dichtung 21 ist zwischen einer an dem Spannrahmen 15 umlaufenden zweiten Dichtfläche 22 und einer zweiten Stützfläche 23 des Filtergehäuses 8 angeordnet, und dichtet einen Zwischenraum 24, der durch den Elementrahmen 12 des Filterelements 3, die erste Stützfläche 13 des Filtergehäuses 8, den Spannrahmen 15 und die Wandung des Filtergehäuses 8 begrenzt wird, gegen den Rohgasraum 5 ab. In diesem Zwischenraum 24 sind die vier Spannorgane 16 untergebracht, die für den nötigen Anpressdruck des Spannrahmens 15 gegen das Filterelement 3 und damit für die erforderliche Abdichtung des Filterelements 3 gegenüber dem Zwischenraum 24 sorgen.

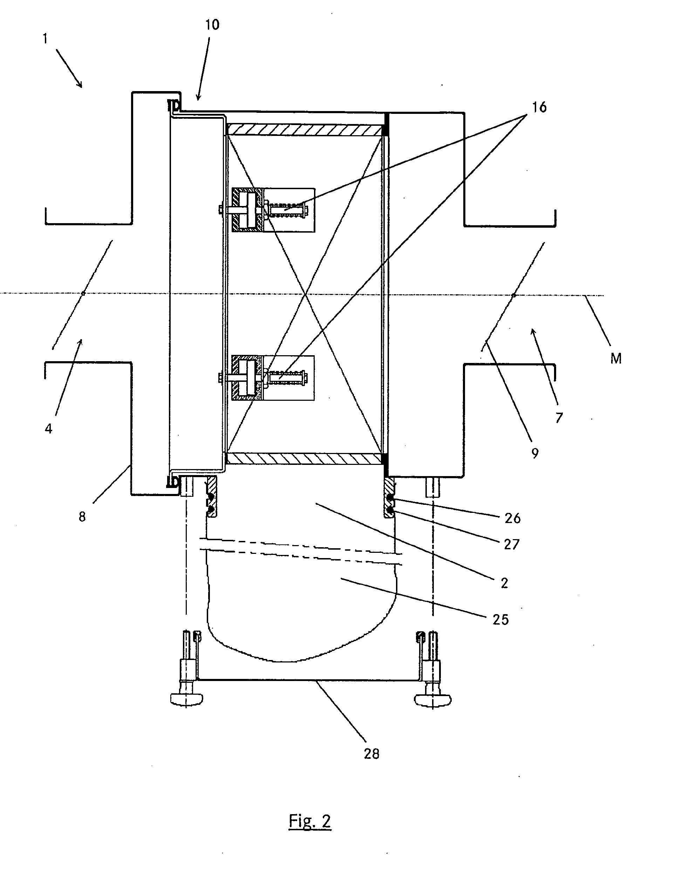

Der in Figur 1 dargestellte Aufbau der Filtervorrichtung 1 ist in Figur 2 als Horizontalschnitt gezeigt. Um eine möglichst kompakte Form der Filtervorrichtung zu erhalten, sind in der in Figur 2 abgebildeten Ausführungsform die beiden Spannorgane 16 im oberen Teil des Zwischenraums 24, im Vergleich zu ihrer in Figur 1 gezeigten Lage, symmetrisch zu einer durch den Rohgaseinlass 4 und den Reingasauslass 7 verlaufenden Mittellinie M näher zueinander positioniert. Dies bietet den Vorteil einer besseren Handhabbarkeit des Filterelements 3 im Falle von dessen Auswechslung.

Bei einem Wechsel des Filterelements 3 werden die Spannorgane 16 gelöst, wodurch das Filterelement 3 in Durchströmrichtung ein gewisses räumliches Spiel erhält und dadurch leicht nach vorne durch die Wechselöffnung 2 im Filtergehäuse 8 in einen dort befindlichen Wechselsack 25 gezogen werden kann. Dieser Wechselsack 25 wird dann entsprechend der bekannten sogenannten "Wechselsackmethode" an seiner dem Filtergehäuse 8 zugewandten offenen Seite mit zwei Schweißnähten verschlossen, zwischen den Schweißnähten abgetrennt und mit dem enthaltenen alten Filterelement 3 entfernt. Ein neuer Wechselsack 25 mit einem neuen Filterelement 3 wird über eine Klemmdichtung 26 am Filtergehäuse 8 so befestigt, dass sich der verschlossene Rest des alten Wechselsacks 25 im Innern des neuen Wechselsacks 25 befindet. Nach Entfernen einer zweiten Klemmdichtung 27, die den Rest des alten Wechselsacks 25 gehaltert hat, kann der Rest des alten Wechselsacks 25 im neuen Wechselsack 25 untergebracht, das neue Filterelement 3 durch die nun freie Wechselöffnung 2 in das Filtergehäuse 8 eingesetzt und mittels der Spanneinrichtung 10 fixiert werden. Der neue, am Filtergehäuse 8 befestigte Wechselsack 25 kann dann zusammengefaltet und die Wechselöffnung 2 mittels einer Abdeckung 28 verschlossen werden. Auf diese Weise tritt weder das alte, verbrauchte Filterelement 3 noch der eventuell kontaminierte Innenraum des Filtergehäuses 8 mit der die Filtervorrichtung 1 umgebenden äußeren Umwelt in Kontakt, wodurch deren Kontamination mit sehr hoher Sicherheit ausgeschlossen werden kann.

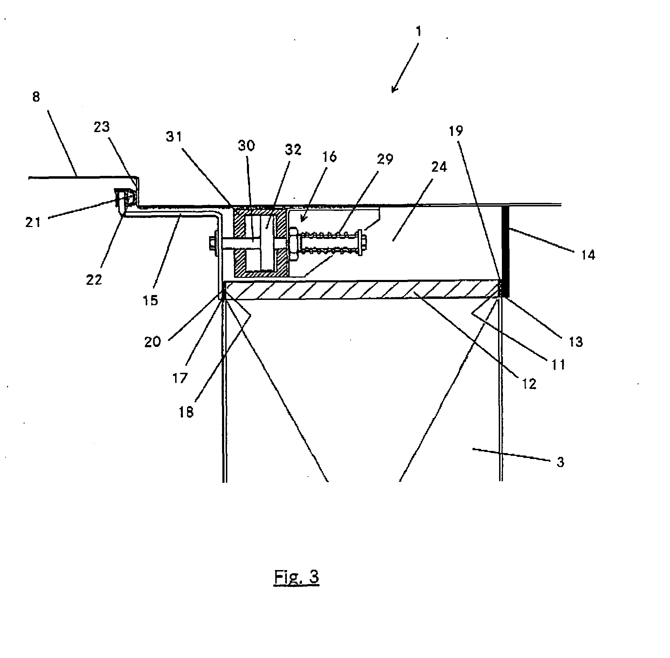

In Figur 3 ist der Aufbau des Dichtungssystems und der Spannorgane 16 detaillierter dargestellt. Ein solches am Filtergehäuse 8 befestigtes Spannorgan 16 besteht aus einer Druckfeder 29, die mittels eines bolzenförmigen Übertragungselements 30 den Spannrahmen 15 gegen das Filterelement 3 und dieses wiederum gegen die erste Stützfläche 13 des Filtergehäuses 8 zieht. Des weiteren weist das Spannorgan 16 einen Pneumatikzylinder 31 auf, dessen Kolben 32 mit dem bolzenförmigen Übertragungselement 30 fest verbunden ist. Wird der Pneumatikzylinder 31 mit Druckluft befüllt, übt er auf die Druckfeder 29 eine ihrer Druckkraft entgegengesetzte, größere Kraft aus, womit zugleich auch die Zugkraft auf den Spannrahmen 15 überwunden und so für eine Entlastung des Filterelements 3 gesorgt wird. Dieses kann dann, wie oben beschrieben, leicht aus dem Filtergehäuse 8 entfernt werden.

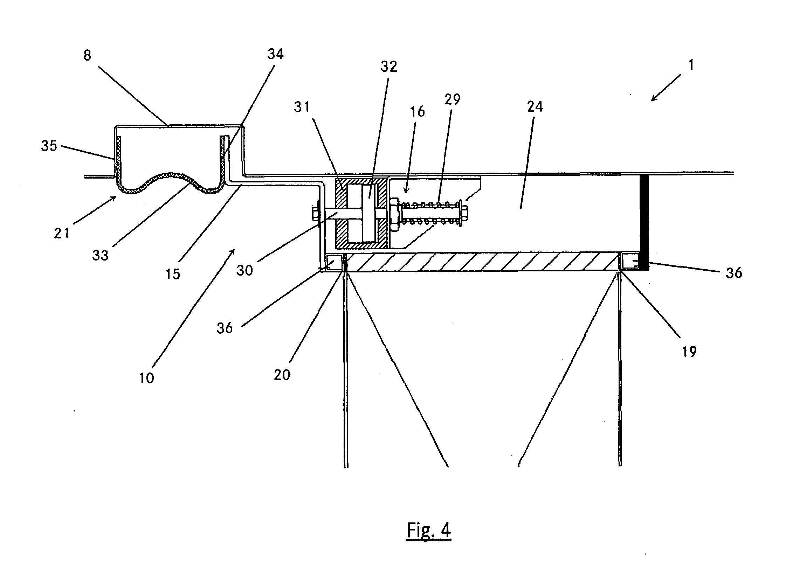

In Figur 4 ist schließlich eine alternative Ausführungsform der Filtervorrichtung 1 gezeigt. Anstelle der dritten Dichtung 21 zwischen der zweiten Dichtfläche 22 des Spannrahmens 15 und der zweiten Stützfläche 23 des Filtergehäuses 8, weist diese Ausführungsform als dritte Dichtung 21 einen Faltenbalg 33 auf, der sich zwischen einer zur Durchströmungsrichtung senkrechten Fläche 34 des Spannrahmens 15 und einer ebenfalls zur Durchströmungsrichtung senkrechten Fläche 35 der Wandung des Filtergehäuses 8 befindet und an diesen Flächen 34 und 35 befestigt ist. Durch Verwendung dieses Faltenbalgs 33, der in Durchströmungsrichtung in seiner Länge variierbar ist, bleibt der Zwischenraum 24 zwischen dem Spannrahmen 15 und dem Filtergehäuse 8 auch bei Entlastung des Filterelements 3 gegenüber dem Rohgasraum abgedichtet, was eine mögliche Kontamination dieses Zwischenraums bei einem Filterwechsel stark reduziert.

Weiterhin weist die in Figur 4 abgebildete Ausführungsform je eine Prüfrille 36 zwischen der ersten Dichtung 19 und der ersten Stützfläche 13 des Filtergehäuses 8 sowie zwischen der zweiten Dichtung 20 und der ersten Dichtfläche 17 des Spannrahmens 15 auf. Mit Hilfe dieser Prüfrillen 36 kann die Dichtigkeit der Dichtungen 19 und 20 permanent überwacht werden, indem in bekannter Weise die Prüfrillen 36 mit einem Unterdruck beaufschlagt werden. Eine hier nicht gezeigte dritte Prüfrille 36 kann zum Beispiel zusätzlich im Bereich der dritten Dichtung 21 angebracht werden.

Mit der hier beschriebenen Positionierung der Spannorgane 16 in den Zwischenraum 24 zwischen dem Elementrahmen 12 des Filterelements 3, dem Filtergehäuse 8, der ersten Stützfläche 13 des Filtergehäuses 8 sowie dem Spannrahmen 15 der Spanneinrichtung 10 ist eine sehr kompakte Bauweise der Filtervorrichtung 1 möglich. Außerdem wird auf diese Weise eine Kontamination der Spannorgane 16 durch das Rohgas weitgehend ausgeschlossen, wodurch deren aufwändige Reinigung eingespart werden kann.

### Bezugszeichenliste

- 1: Filtervorrichtung
- 2: Wechselöffnung
- 3: Filterelement
- 4: Rohgaseinlass
- 5: Rohgasraum
- 6: Reingasraum
- 7: Reingasauslass
- 8: Filtergehäuse
- 9: Absperrklappe
- 10: Spanneinrichtung
- 11: erste Stirnfläche Filterelement
- 12: Elementrahmen
- 13: erste Stützfläche Filtergehäuse
- 14: Wandung
- 15: Spannrahmen
- 16: Spannorgan
- 17: erste Dichtfläche Spannrahmen
- 18: zweite Stirnfläche Filterelement
- 19: erste Dichtung Filterelement
- 20: zweite Dichtung Filterelement
- 21: dritte Dichtung
- 22: zweite Dichtfläche Spannrahmen
- 23: zweite Stützfläche Filtergehäuse
- 24: Zwischenraum
- 25: Wechselsack
- 26: Klemmdichtung
- 27: Klemmdichtung
- 28: Abdeckung
- 29: Druckfeder
- 30: Übertragungselement
- 31: Pneumatikzylinder
- 32: Kolben
- 33: Faltenbalg
- 34: Fläche
- 35: Fläche
- 36: Prüfrille
- A: Gasvolumenstrom
- B: Gasvolumenstrom
- M: Mittellinie

## Patentansprüche

1. Vorrichtung (1) zur Filtration eines mit Aerosolen beladenen Gasvolumenstroms (A), mit einem Filtergehäuse (8), das einen Rohgaseinlass (4) und einen Reingasauslass (7) aufweist und mit mindestens einem Filterelement (3) versehen ist, das einen Innenraum des Filtergehäuses (8) in einen den Rohgaseinlass (4) aufweisenden Rohgasraum (5) und einen den Reingasauslass (7) aufweisenden Reingasraum (6) unterteilt, wobei ein Überströmen des Gasvolumenstroms (A) von dem Rohgasraum (5) in den Reingasraum (6) lediglich durch ein in dem Filterelement (3) befindliches Filtermedium hindurch möglich ist und das Filtergehäuse (8) eine Wechselöffnung (2) aufweist, durch die das Filterelement (3) quer zu einer Durchströmungsrichtung mittels einer Wechselsackmethode entnehmbar oder einführbar ist, wobei das Filterelement (3) einen einen Durchströmungsquerschnitt umlaufend umgebenden Elementrahmen (12) besitzt, mit dessen erster Stirnfläche (11) sich das Filterelement (3) unter Zwischenschaltung einer ersten umlaufenden Dichtung (19) an einer ersten senkrecht zu der Durchströmungsrichturig ausgerichteten ersten Stützfläche (13) des Filtergehäuses (8) abstützt und an dessen gegenüber liegender zweiter Stirnfläche (18) das Filterelement (3) mittels eines Spannrahmens (15) einer Spanneinrichtung (10) gegen die erste Stützfläche (13) des Filtergehäuses (8) pressbar ist, wobei zwischen einer ersten umlaufenden Dichtfläche (17) des Spannrahmens (15). und der zweiten Stirnfläche (18) des Elementrahmens (12) eine zweite umlaufende Dichtung (20) angeordnet ist, wobei der Spannrahmen (15) mit einer dritten, um den Durchströmungsquerschnitt umlaufenden Dichtung (21) an das Filtergehäuse (8) dichtend angeschlossen ist, und wobei ferner die Spanneinrichtung (10) mindestens ein Spannorgan (16) zur Erzeugung einer Spannkraft aufweist, **dadurch gekennzeichnet, dass** das Spannorgan (16) zwischen dem Spannrahmen (15) und der ersten Stützfläche (13) des Filtergehäuses (8) angeordnet ist.

2. Vorrichtung (1) nach Anspruch 1, **dadurch gekennzeichnet, dass** das Spannorgan (16) zwischen der ersten Dichtung (19) und der dritten Dichtung (21) angeordnet ist.

3. Vorrichtung (1) nach Anspruch 1 oder 2, **dadurch gekennzeichnet, dass** das Spannorgan (16) zwischen der ersten Dichtung (19) und der zweiten Dichtung (20) angeordnet ist.

4. Vorrichtung (1) nach einem der Ansprüche 1 bis 3, **dadurch gekennzeichnet, dass** das Spannorgan (16) zwischen dem Elementrahmen (12) und dem Filtergehäuse (8) angeordnet ist.

5. Vorrichtung (1) nach einem der Ansprüche 1 bis 4, **dadurch gekennzeichnet, dass** das Spannorgan (16) in einem dichtend abgeschlossenen Zwischenraum (24) angeordnet ist, der von dem Elementrahmen (12), dem Spannrahmen (15) und dem Filtergehäuse (8) begrenzt wird.

6. Vorrichtung (1) nach einem der Ansprüche 1 bis 5, **dadurch gekennzeichnet, dass** der Spannrahmen (15) eine zweite umlaufende Dichtfläche (22) aufweist, mit der die dritte umlaufende Dichtung (21) gegen eine zweite Stützfläche (23) des Filtergehäuses (8) pressbar ist.

7. Vorrichtung (1) nach einem der Ansprüche 1 bis 5, **dadurch gekennzeichnet, dass** die dritte Dichtung (21) ein Faltenbalg (33) ist, der in Dichtungsrichtung in seiner Länge veränderbar ist.

8. Vorrichtung (1) nach einem der Ansprüche 1 bis 7, **dadurch gekennzeichnet, dass** das Spannorgan (16) eine Druckfeder (29) aufweist, die eine Zugkraft auf ein mit dem Spannrahmen (15) gekoppeltes, bolzenförmiges Übertragungselement (30) ausübt.

9. Vorrichtung (1) nach einem der Ansprüche 1 bis 8, **dadurch gekennzeichnet, dass** der Spannrahmen (15) mittels einer die Spannkraft der Spanneinrichtung (10) übersteigenden Entlastungseinrichtung so bewegbar ist, dass die Dichtungen (19, 20, 21) entlastet sind und das Filterelement (3) im Wesentlichen kraftfrei in eine Richtung senkrecht zu der Durchströmungsrichtung durch eine öffenbare und dicht verschließbare Wechselöffnung (2) in dem Filtergehäuse (8) aus seiner Betriebsposition entnehmbar ist.

10. Vorrichtung (1) nach Anspruch 9, **dadurch gekennzeichnet, dass** die Entlastungseinrichtung ein Pneumatikzylinder (31) ist, der zwischen der Druckfeder (29) des Spannorgans (16) und dem Spannrahmen (15) angeordnet ist, wobei ein Kolben (32) der Entlastungseinrichtung mit dem Übertragungselement (30) gekoppelt ist.

11. Vorrichtung (1) nach einem der Ansprüche 1 bis 10, **dadurch gekennzeichnet, dass** das Spannorgan (16) beziehungsweise seine Entlastungseinrichtung an dem Filtergehäuse (8) befestigt ist.

12. Vorrichtung (1) nach einem der Ansprüche 1 bis 11, **dadurch gekennzeichnet, dass** der Spannrahmen (15) im Querschnitt eine Z-Form oder Doppel-L-Form besitzt.

13. Vorrichtung (1) nach einem der Ansprüche 1 bis 12, **dadurch gekennzeichnet, dass** die dritte Dichtung (21) - in Durchströmungsrichtung betrachtet - einen gröβeren möglichen Verformungsweg aufweist als die erste Dichtung (19) und/oder die zweite Dichtung (20).

14. Vorrichtung (1) nach einem der Ansprüche 1 bis 13, **dadurch gekennzeichnet, dass** ein von der ersten Stützfläche (13) begrenzter erster freier Querschnitt kleiner ist als ein von der zweiten Stützfläche (23) begrenzter zweiter freier Querschnitt.

15. Vorrichtung (1) nach einem der Ansprüche 1 bis 14, **dadurch gekennzeichnet, dass** sich zwischen der ersten Dichtung (19) und der ersten Stützfläche (13) und/oder zwischen der zweiten Dichtung (20) und der ersten Dichtfläche (17) des Spannrahmens (15) und/oder zwischen der dritten Dichtung (21) und der zweiten Stützfläche (23) des Filtergehäuses (8) jeweils eine Prüfrille (36) befindet.

## Claims

1. A device (1) for the filtration of an aerosol-laden gas volume flow (A), with a filter housing (8), which comprises a crude gas inlet (4) and a clean gas outlet (7) and is provided with at least one filter element (3) which divides an interior space of the filter housing (8) into a crude gas chamber (5) comprising the crude gas inlet (4) and a clean gas chamber (6) comprising the clean gas outlet (7), wherein an overflow of the gas volume flow (A) from the crude gas chamber (5) into the clean gas chamber (6) is possible only through a filter medium located in the filter element (3), and the filter housing (8) comprises a change-over opening (2), through which the filter element (3) can be removed or introduced transversal to the through-flow direction by means of a change-over bag method, wherein the filter element (3) comprises a surrounding element frame (12) running around a through-flow cross-section, with the first end face (11) whereof the filter element (3) is supported, with the interposition of a first circumferential seal (19), on a first support face (13) of the filter housing (8) orientated normal to the through-flow direction and at the opposite-lying second end face (18) whereof the filter element (3) can be pressed against the first support face (13) of the filter housing (8) by means of a clamping frame (15) of a clamping device (10), wherein a second circumferential seal (20) is disposed between a first circumferential sealing face (17) of the clamping frame (15) and the second end face (18) of the element frame (12), wherein the clamping frame (15) is connected in a sealing manner to the filter housing (8) with a third seal (21) running around the through-flow cross-section, and wherein the clamping device (10) further comprises at least one clamping element (16) for producing a clamping force, **characterised in that** the clamping element (16) is disposed between the clamping frame (15) and the first support face (13) of the filter housing (8).

2. The device (1) according to claim 1, **characterised in that** the clamping element (16) is disposed between the first seal (19) and the third seal (21).

3. The device (1) according to claim 1 or 2, **characterised in that** the clamping element (16) is disposed between the first seal (19) and the second seal (20).

4. The device (1) according to any one of claims 1 to 3, **characterised in that** the clamping element (16) is disposed between the element frame (12) and the filter housing (8).

5. The device (1) according to any one of claims 1 to 4, **characterised in that** the clamping element (16) is disposed in an intermediate space (24) closed off in a sealed manner, which is limited by the element frame (12), the clamping frame (15) and the filter housing (8).

6. The device (1) according to any one of claims 1 to 5, **characterised in that** the clamping frame (15) comprises a second circumferential sealing face (22), with which the third circumferential seal (21) can be pressed against a second support face (23) of the filter housing (8).

7. The device (1) according to any one of claims 1 to 5, **characterised in that** the third seal (21) is a bellows (33), which is variable in its length in the sealing direction.

8. The device (1) according to any one of claims 1 to 7, **characterised in that** the clamping element (16) comprises a compression spring (29), which exerts a tensile force on a bolt-shaped transmission element (30) coupled with the clamping frame (15).

9. The device (1) according to any one of claims 1 to 8, **characterised in that** the clamping frame (15) can be moved by means of a load-relieving device which exceeds the clamping force of the clamping device (10), in such a way that the seals (19, 20, 21) are relieved of load and the filter element (3) can be removed from its operational position essentially force-free in a direction normal to the through-flow direction through an openable and tightly closable change-over opening (2) on the filter housing (8).

10. The device (1) according to claim 9, **characterised in that** the load-relieving device is a pneumatic cylinder (31), which is disposed between the compression spring (29) of the clamping element (16) and the clamping frame (15), wherein a piston (32) of the load-relieving device is coupled with the transmission element (30).

11. The device (1) according to any one of claims 1 to 10, **characterised in that** the clamping element (16) or its load-relieving device is fixed to the filter housing (8).

12. The device (1) according to any one of claims 1 to 11, **characterised in that** the clamping frame (15) has a Z-shape or double-L-shape in cross section.

13. The device (1) according to any one of claims 1 to 12, **characterised in that** the third seal (21) - viewed in the through-flow direction - has a larger possible deformation path than the first seal (19) and/or the second seal (20).

14. The device (1) according to any one of claims 1 to 13, **characterised in that** a first free cross-section limited by the first support face (13) is smaller than a second free cross-section limited by the second support face (23).

15. The device (1) according to any one of claims 1 to 14, **characterised in that** a test groove (36) is located in each case between the first seal (19) and the first support face (13) and/or between the second seal (20) and the first sealing face (17) of the clamping frame (15) and/or between the third seal (21) and the second support face (23) of the filter housing (8).

## Revendications

1. Dispositif (1) de filtration d'un débit volumétrique gazeux (A) chargé en aérosols, comprenant un boitier de filtration (8) qui présente une admission d'air brut (4) et une sortie d'air pur (7) et étant doté au moins d'un élément de filtration (3) qui subdivise un espace intérieur du boitier de filtration (8) en un espace de gaz brut (5) présentant l'admission d'air brut (4) et un espace de gaz pur (6) présentant la sortie d'air pur (7), sachant qu'un trop-plein du débit volumétrique gazeux (A) de l'espace de gaz brut (5) à l'espace de gaz pur (6) est possible uniquement à travers un agent de filtration se trouvant dans l'élément de filtration (3), et le boitier de filtration (8) présente une ouverture de remplacement (2) à travers laquelle l'élément de filtration (3) peut être retiré ou introduit transversalement à un sens d'écoulement au moyen d'un procédé de sac de remplacement, sachant que l'élément de filtration (3) possède un cadre d'élément (12) entourant une section d'écoulement de manière périphérique, avec la première face avant (11) duquel, l'élément de filtration (3), par l'intermédiaire d'un premier joint circulaire (19), s'appuie sur une première surface d'appui (13) du boitier de filtration (8) dirigée verticalement par rapport au sens d'écoulement, et sur la deuxième face avant (18) duquel, en face, l'élément de filtration (3) peut être appuyé au moyen d'un cadre de tension (15) d'un dispositif de tension (10) contre la première surface d'appui (13) du boitier de filtration (8), sachant qu'entre une première surface d'étanchéité (17) périphérique du cadre de tension (15) et la deuxième face avant (18) de l'élément de cadre (12), un deuxième joint périphérique (20) est placé, sachant que le cadre de tension (15) est raccordé de manière hermétique au boitier de filtration (8) par un troisième joint (21) périphérique autour de la section d'écoulement, et sachant en outre que le dispositif de tension (10) présente au moins un organe de tension (16) pour produire une force de tension, **caractérisé en ce que** l'organe de tension (16) est placé entre le cadre de tension (15) et la première surface d'appui (13) du boitier de filtration (8).

2. Dispositif (1) selon la revendication 1, **caractérisé en ce que** l'organe de tension (16) est disposé entre le premier joint (19) et le troisième joint (21).

3. Dispositif (1) selon la revendication 1 ou 2, **caractérisé en ce que** l'organe de tension (16) est disposé entre le premier joint (19) et le deuxième joint (20).

4. Dispositif (1) selon l'une des revendications 1 à 3, **caractérisé en ce que** l'organe de tension (16) est disposé entre l'élément de cadre (12) et le boitier de filtration (8).

5. Dispositif (1) selon l'une des revendications 1 à 4, **caractérisé en ce que** l'organe de tension (16) est disposé dans un espace intermédiaire (24) fermé de manière hermétique qui est délimité par le cadre d'élément (12), le cadre de tension (15) et le boitier de filtration (8).

6. Dispositif (1) selon l'une des revendications 1 à 5, **caractérisé en ce que** le cadre de tension (15) présente une deuxième surface d'étanchéité périphérique (22) avec laquelle le troisième joint périphérique (21) peut être comprimé contre une deuxième surface d'appui (23) du boitier de filtration (8).

7. Dispositif (1) selon l'une des revendications 1 à 5, **caractérisé en ce que** le troisième joint (21) est un soufflet (33) qui est modifiable en longueur dans la direction de compression.

8. Dispositif (1) selon l'une des revendications 1 à 7, **caractérisé en ce que** l'organe de tension (16) présente un ressort de pression (29) qui exerce une force de traction sur un élément de transmission (30) en forme de goujon, couplé au cadre de tension (15).

9. Dispositif (1) selon l'une des revendications 1 à 8, **caractérisé en ce que** le cadre de tension (15) est mobile au moyen d'un dispositif de décharge dépassant la force de tension du dispositif de tension (10) de telle sorte que les joints (19, 20, 21) sont déchargés et l'élément de filtration (3) peut être retiré essentiellement sans force de sa position de service, dans une direction verticale au sens d'écoulement, à travers une ouverture de remplacement (2) dans le boitier de filtration (8) pouvant être ouverte et fermée de manière hermétique.

10. Dispositif (1) selon la revendication 9, **caractérisé en ce que** le dispositif de décharge est un vérin pneumatique (31) qui est placé entre le ressort de pression (29) de l'organe de tension (16) et le cadre de tension (15), sachant qu'un piston (32) du dispositif de décharge est couplé à l'élément de transmission (30).

11. Dispositif (1) selon l'une des revendications 1 à 10, **caractérisé en ce que** l'organe de tension (16), respectivement son dispositif de décharge, est fixé sur le boitier de filtration (8).

12. Dispositif (1) selon l'une des revendications 1 à 11, **caractérisé en ce que** le cadre de tension (15) possède une section formée en Z ou en double L.

13. Dispositif (1) selon l'une des revendications 1 à 12, **caractérisé en ce que** le troisième joint (21), vu dans le sens d'écoulement, présente un trajet de déformation possible plus grand que le premier joint (19) et/ou le deuxième joint (20).

14. Dispositif (1) selon l'une des revendications 1 à 13, **caractérisé en ce qu'**une première section libre délimitée par la première surface d'appui (13) est plus petite qu'une deuxième section libre délimitée par la deuxième surface d'appui (23).

15. Dispositif (1) selon l'une des revendications 1 à 14, **caractérisé en ce qu'**une rainure de contrôle (36) se trouve entre le premier joint (19) et la première surface d'appui (13) et/ou entre le deuxième joint (20) et la première surface d'étanchéité (17) du cadre de tension (15) et/ou entre le troisième joint (21) et la deuxième surface d'appui (23) du boitier de filtration (8).
